# FASCICULE DE BREVET EUROPEEN

(11) **EP 0 549 396 B1**
(45) Date de publication et mention de la délivrance du brevet: **17.05.1995**
(21) Numéro de dépôt: 92403355.8
(22) Date de dépôt: 09.12.1992
(51) Int. Cl.: B60S 1/38

(54) **Déflecteur aérodynamique comportant une partie mobile pour un essuie-glace de véhicule automobile**
Aerodynamisches Leitblech mit einem bewegbaren Abschnitt für einen Scheibenwischer eines Kraftfahrzeuges
Aerodynamic deflector including a movable portion for a windscreen wiper of a motor vehicle

(30) Priorité: 20.12.1991 FR 9115926
(43) Date de publication de la demande: 30.06.1993
(73) Titulaire: PAUL JOURNEE S.A., F-92700 Colombes (FR)
(72) Inventeur: Journee, Maurice, F-60240 Reilly (FR)
(74) Mandataire: Lemaire, Marc

(56) Documents cités:
- EP-A- 0 233 504
- DE-A- 3 829 465
- FR-A- 2 475 480
- FR-A- 2 505 754
- FR-A- 2 556 297

## Description

La présente invention concerne un déflecteur aérodynamique d'un essuie-glace de véhicule automobile.

L'invention concerne plus particulièrement un déflecteur destiné à équiper un essuie-glace du type comportant généralement un bras d'essuie-glace qui supporte un balai d'essuie-glace apte à essuyer une surface vitrée telle que par exemple le pare-brise du véhicule automobile.

On sait que l'écoulement de l'air sur le parebrise a tendance à provoquer un soulèvement du balai d'essuie-glace malgré l'effort appliqué à ce dernier par les moyens de rappel élastique qui sont normalement prévus entre le bras d'essuie-glace et le balai d'essuieglace pour appliquer ce dernier sur la surface à essuyer avec une pression d'essuyage déterminée. Le phénomène de soulèvement du balai d'essuie-glace s'accroît avec l'augmentation de la vitesse du véhicule qui en est équipé.

Pour rémédier à ce problème, le document FR-A-2 505 754 illustre un balai d'essuie-glace dont les palonniers supérieurs et inférieurs sont à contour profilé et inclinés différemment en direction de la surface à essuyer.

Un déflecteur aérodynamique, qui comporte généralement un aileron aérodynamique de déflexion et des moyens de liaison et/ou de fixation de l'aileron sur un des composants mobiles du dispositif d'essuie-glace, a généralement pour but de dévier les flux d'air frappant le balai d'essuie-glace de manière à éviter son décollement. Le décollement est un phénomène nuisible car, au cours du balayage, il laisse intacte une pellicule d'eau sur la surface à essuyer qui gêne notablement la visibilité du conducteur.

Il est connu, notamment par le document FR-A-2.556.297, qui décrit un déflecteur selon la préambule de la revendication 1, d'agencer un déflecteur aérodynamique sur le balai d'essuie-glace ou sur le bras d'essuie-glace afin de créer un effort tendant à appliquer à l'essuie-glace un effort en direction de la vitre résultant de l'effet de portance aérodynamique.

Un déflecteur de ce type comporte des moyens d'accrochage sur le bras ou le balai d'essuie-glace et un aileron aérodynamique de déflexion profilé de forme généralement convexe tournée vers la surface à essuyer de manière à produire une force qui tende à pousser le balai d'essuie-glace en direction de la surface à essuyer.

Cette partie déflectrice profilée présente une courbure moyenne permettant de procurer une efficacité maximale au déflecteur dans une certaine plage de vitesse du véhicule.

La demanderesse a constaté que, en dehors de cette plage, le déflecteur avait une efficacité moindre qui nuisait à la qualité d'essuyage de la surface vitrée.

Afin de remédier à cet inconvénient, la présente invention vise à proposer une structure de déflecteur aérodynamique comportant une partie déflectrice dont l'efficacité peut varier en fonction de la vitesse du véhicule, et plus particulièrement de la vitesse du vent relatif auquel est soumis le balai d'essuie-glace.

Dans ce but l'invention propose un déflecteur aérodynamique d'un essuie-glace, notamment de véhicule automobile, du type comportant un bras d'essuie-glace qui supporte un balai d'essuie-glace apte à essuyer une surface vitrée, ledit déflecteur comportant un aileron aérodynamique de déflexion et des moyens de liaison et/ou de fixation de l'aileron sur un composant mobile du dispositif d'essuie-glace, caractérisé en ce que l'aileron comporte au moins deux parties articulées l'une par rapport à l'autre autour d'un axe d'articulation sensiblement parallèle à la direction principale longitudinale de l'aileron en ce qu'une première partie fixe de l'aileron est reliée et/ou fixée audit composant mobile et une deuxième partie est articulée par rapport à ladite première partie fixe et en ce qu'il comporte des moyens de rappel élastique de la deuxième partie qui sollicitent cette dernière vers une position de repos dans laquelle les faces actives de déflexion aérodynamique des deux parties (22, 24) de l'aileron s'étendent sensiblement dans le prolongement l'une de l'autre.

Selon d'autres caractéristiques de l'invention :
- un espace libre sépare les bords adjacents des deux parties de l'aileron :
- les deux parties de l'aileron sont articulées l'une par rapport à l'autre au voisinage de leurs bords adjacents :
- l'axe d'articulation des deux parties est agencé au voisinage du bord d'attaque de l'aileron : et
- le déflecteur comporte des moyens de commande du déplacement relatif des deux parties de l'aileron en fonction d'un paramètre de fonctionnement du véhicule ou d'un paramètre représentatif des conditions d'évolution du véhicule.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en section d'un dispositif d'essuie-glace équipé d'un premier mode de réalisation d'un déflecteur aérodynamique conforme aux enseignements de l'invention et sur laquelle la partie mobile de l'aileron est illustrée dans sa position de repos :
- la figure 2 est une vue partielle similaire à celle de la figure 1 dans laquelle la partie mobile de l'aileron est représentée dans une position inclinée par rapport à la position de repos ; et
- les figures 3 et 4 sont des vues similaires à celles des figures 1 et 2 qui illustrent un second mode de réalisation d'un déflecteur aérodynamique réalisé conformément aux enseignements de l'invention.

On a schématisé sur les figures un dispositif d'essuie-glace 10 qui est constitué pour l'essentiel par un bras d'essuie-glace 12 qui supporte, au moyen d'une structure non représentée, un balai d'essuie-glace 14 qui porte une lame d'essuyage 16 qui est apte à essuyer une surface vitrée 18 constituée par exemple par un parebrise de véhicule automobile.

Selon un principe connu, tel qu'il est par exemple décrit et représenté dans le document FR-A-2.556.297, le dispositif d'essuie-glace 10 est équipé d'un déflecteur aérodynamique 20 qui est agencé latéralement par rapport au dispositif d'essuie-glace 10 et qui s'étend longitudinalement, c'est-à-dire selon une direction perpendiculaire au plan des figures, le long des faces latérales 13 du bras d'essuie-glace 12 et 15 du balai d'essuie-glace 14.

Le déflecteur aérodynamique 20 est relié ou fixé par exemple au bras d'essuie-glace 12 et/ou au balai d'essuie-glace 14 par des moyens de liaison et/ou de fixation qui ne sont pas illustrés sur les figures mais qui sont conçus de manière que le déflecteur 20 occupe globalement la position relative illustrée aux figures par rapport au dispositif d'essuie-glace 10.

Conformément à l'invention, la partie déflectrice du déflecteur aérodynamique 20, qui est également appelé aileron aérodynamique de déflexion, est réalisée en deux parties 22 et 24 qui sont articulées l'une par rapport à l'autre autour d'un axe géométrique d'articulation X-X qui s'étend selon une direction sensiblement parallèle à la direction principale longitudinale du déflecteur 20.

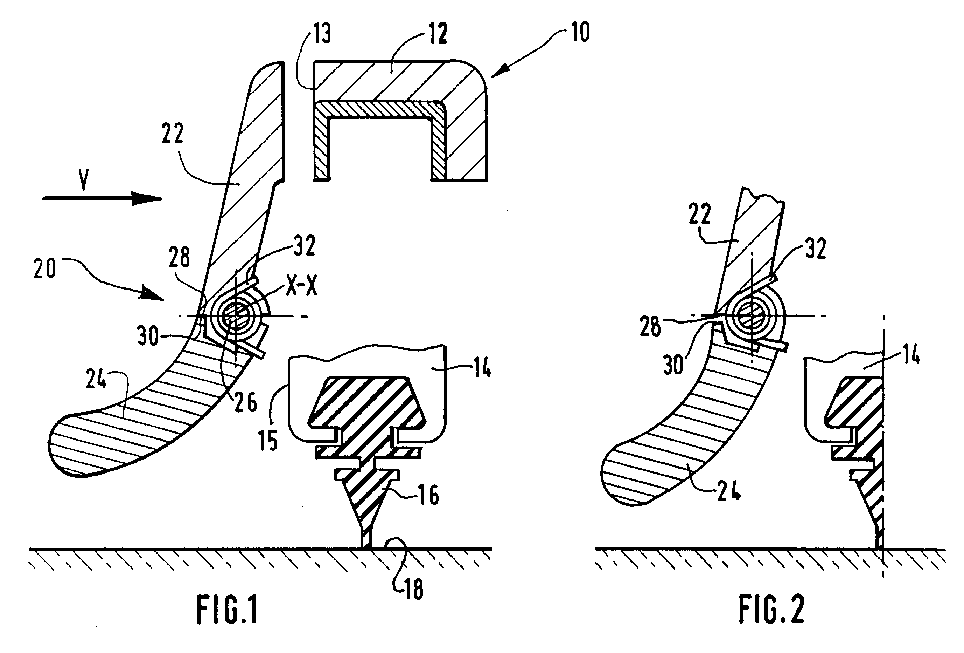

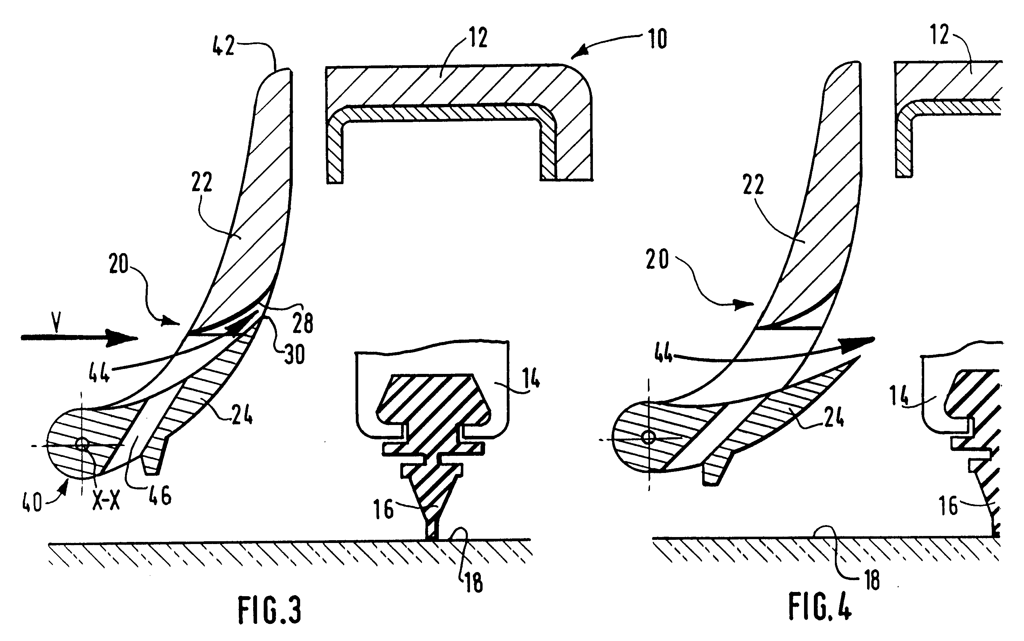

Dans le premier mode de réalisation illustré aux figures 1 et 2, la première partie 22 de l'aileron aérodynamique de déflexion est une partie fixe qui est reliée ou fixée au dispositif d'essuie-glace 10, tandis que la seconde partie 24 est articulée sur la première partie fixe 22 au moyen d'un axe 26 afin de pouvoir pivoter autour de l'axe X-X.

L'axe d'articulation 26 s'étend au voisinage des deux bords adjacents 28 et 30 respectivement de la première partie fixe 22 et de la seconde partie mobile 24 de l'aileron aérodynamique de déflexion.

La position de repos de la partie mobile 24 illustrée à la figure 1 est définie par la venue en butée des bords adjacents 28 et 30 sous l'action d'un ressort de rappel de torsion 32 qui sollicite la partie mobile 24 en rotation autour de l'axe X-X dans le sens anti-horaire en considérant la figure 1.

La partie mobile 24 du déflecteur 20 est donc susceptible de pivoter autour de l'axe X-X, dans le sens horaire en considérant la figure 1, à l'encontre de l'effort de rappel élastique qui lui est appliqué par le ressort 32, lorsqu'elle est soumise à un effort résultant par exemple de l'action du vent relatif V auquel est soumis le dispositif d'essuie-glace 10.

Sous l'action de cet effort de portance aérodynamique, le volet 24 peut pivoter autour de l'axe X-X pour venir occuper par exemple la position intermédiaire illustrée à la figure 2 dans laquelle on voit que les bords adjacents 28 et 30 ne sont plus en contact.

La vitesse du vent relatif V à partir de laquelle se produit le pivotement de la partie mobile 24 dépend donc directement du tarage du ressort de rappel 32.

On décrira maintenant le second mode de réalisation du déflecteur aérodynamique tel qu'il est illustré aux figures 3 et 4 sur lesquelles les éléments identiques ou équivalents à ceux représentés aux figures 1 et 2 sont désignés par les mêmes chiffres de référence.

La partie fixe 22 du déflecteur aérodynamique 20 est ici la partie principale de l'aileron aérodynamique qui s'étend sensiblement sur toute sa hauteur, c'est-à-dire depuis son bord d'attaque inférieur arrondi 40 jusqu'à son bord supérieur d'extrémité 42.

La partie mobile 24 articulée sur la partie fixe 22 est une partie située à la base de la partie fixe 22, l'axe d'articulation X-X étant situé à proximité du bord d'attaque 40 du déflecteur aérodynamique.

La partie mobile 24 peut s'étendre sensiblement sur toute la longueur de l'aileron aérodynamique de déflexion et être articulée sur la partie fixe 22 au voisinage de ses deux extrémités libres (non représentées).

Dans la position de repos illustrée à la figure 3, on constate qu'il existe un espace libre 44 entre les bords adjacents 28 et 30 de la partie fixe 22 et de la partie mobile 24.

Plus précisément, le bord adjacent 28 de la partie fixe est constitué par le bord inférieur incurvé de l'ouverture formée à la base du déflecteur 20 et dans laquelle peut pivoter la partie mobile 24, tandis que le bord 30 est constitué par le bord d'extrémité libre supérieure de la partie mobile articulée 24.

La partie mobile 24 comporte également un ou plusieurs trous d'évacuation d'eau 46.

La partie mobile 24 peut bien entendu être rappelée élastiquement vers sa position de repos illustrée à la figure 3 par des moyens non illustrés sur les figures tels que par exemple des moyens équivalents au ressort de torsion 32 des figures 1 et 2.

Dans ce second mode de réalisation illustré aux figurez 3 et 4, le pivotement de la partie mobile 24 par rapport à la partie fixe 22, par exemple sous l'action du vent relatif V a pour effet de modifier la conformation aérodynamique des surfaces actives de déflexion du déflecteur 20 et également d'accroître la section du passage libre 44.

Selon des variantes non illustrées sur les figures, il est possible de prévoir que les déplacements de la partie mobile 24 de l'aileron par rapport à la partie fixe 22 sont commandés, par exemple par des moyens à glissière et taquets en fonction de différents paramètres de fonctionnement du véhicule, tels que par exemple un paramètre de fonctionnement du moteur, ou en fonction de paramètres représentatifs du comportement du véhicule prenant par exemple en compte la vitesse de déplacement, l'assiette du véhicule, etc.

De même, le principe de l'invention n'a été illustré qu'avec une seule partie mobile par rapport à une partie fixe, mais il est bien entendu possible de prévoir plusieurs parties mobiles articulées les unes par rapport aux autres de façon à conférer au déflecteur aérodynamique des possibilités plus grandes de variation de forme afin d'obtenir une adaptation idéale de ses performances aérodynamiques en fonction notamment de la vitesse de déplacement du véhicule.

## Revendications

1. Déflecteur aérodynamique (20) d'un essuieglace, notamment de véhicule automobile, du type comportant un bras d'essuie-glace (12) qui supporte un balai d'essuie-glace (14) apte à essuyer une surface vitrée (18), ledit déflecteur (20) comportant un aileron aérodynamique de déflexion et des moyens de liaison et/ou de fixation de l'aileron sur un composant mobile du dispositif d'essuie-glace, caractérisé en ce que l'aileron (20) comporte au moins deux parties (22, 24) articulées l'une par rapport à l'autre autour d'un axe d'articulation (X-X) sensiblement parallèle à la direction principale longitudinale de l'aileron (20), en ce qu'une première partie fixe (22) de l'aileron (20) est reliée et/ou fixée audit composant mobile et une deuxième partie (24) est articulée par rapport à ladite première partie fixe (22) et en ce qu'il comporte des moyens (32) de rappel élastique de la deuxième partie (24) qui sollicitent cette dernière vers une position de repos dans laquelle les faces actives de déflexion aérodynamique des deux parties (22, 24) de l'aileron (20) s'étendent sensiblement dans le prolongement l'une de l'autre.

2. Déflecteur aérodynamique selon la revendication 1, caractérisé en ce qu'un espace libre (44) sépare les bords adjacents (28, 30) des deux parties (22, 24) de l'aileron (20).

3. Déflecteur aérodynamique selon l'une quelconque des revendications 1 à 2, caractérisé en ce que les deux parties (22, 24) de l'aileron sont articulées l'une par rapport à l'autre au voisinage de leurs bords adjacents (28, 30).

4. Déflecteur aérodynamique selon l'une quelconque des revendications 1 à 2, caractérisé en ce que l'axe d'articulation (X-X) des deux parties (22, 24) de l'aileron est agencé au voisinage du bord d'attaque (40) de l'aileron (20).

5. Déflecteur aérodynamique selon l'une quelconque des revendications 1 à 4, caractérisé en ce qu'il comporte des moyens de commande du déplacement relatif des deux parties (22, 24) de l'aileron (20) en fonction d'un paramètre de fonctionnement du véhicule ou d'un paramètre représentatif des conditions d'évolution du véhicule.

## Claims

1. An aerodynamic deflector (20) of a windscreen wiper, in particular for a motor vehicle, of the type comprising a windscreen wiper arm (12) which supports a windscreen wiper blade (14) suitable for wiping a glazed surface (18), the said deflector (20) comprising an aerodynamic deflection fin and means for connecting and/or attaching the fin onto a movable component of the windscreen device,
**characterised in that** the fin (20) comprises at least two portions (22, 24) hinged in relation to one another around an axis of articulation (X-X) roughly parallel to the main longitudinal direction of the fin (20),
**in that** a first fixed portion (22) of the fin (20) is connected and/or attached to said movable component and a second portion (24) is hinged in relation to the said first fixed portion (22),
**and in that** it comprises elastic return means (32) for the second portion (23) which stress the latter towards a position of rest in which the active aerodynamic deflection faces of the two portions (22, 24) of the fin (20) extend roughly in the extension of one another.

2. An aerodynamic deflector according to Claim 1,
**characterised in that** a free space (44) separates the adjacent edges (28, 30) of the two portions (22, 24) of the fin (20).

3. An aerodynamic deflector according to any one of Claims 1 to 2,
**characterised in that** the two portions (22, 24) of the fin are hinged in relation to one another in the vicinity of their adjacent edges (28, 30).

4. An aerodynamic deflector according to any one of Claims 1 to 2,
**characterised in that** the axis of articulation (X-X) of the two portions (22, 24) of the fin is disposed in the vicinity of the leading edge (40) of the fin (20).

5. An aerodynamic deflector according to any one of Claims 1 to 4,
**characterised in that** it comprises means for controlling the relative displacement of the two portions (22, 24) of the fin (20) as a function of an operating parameter of the vehicle or of a parameter representative of the manoeuvring conditions of the vehicle.

## Patentansprüche

1. Aerodynamisches Leitblech (20) für einen Scheibenwischer, insbesondere für Kraftfahrzeuge, in der Ausführung mit einem Scheibenwischerarm (12), der ein Scheibenwischerblatt (14) haltert, das eine Glasfläche (18) wischen kann, wobei das genannte Leitblech (20) eine aerodynamische Luftleitlamelle sowie Mittel zur Verbindung und/oder Befestigung der Lamelle an einem beweglichen Bestandteil des Scheibenwischers umfaßt, **dadurch gekennzeichnet,** daß die Lamelle (20) mindestens zwei Abschnitte (22, 24) umfaßt, die im Verhältnis zueinander um eine Gelenkachse (X-X) angelenkt sind, die in etwa parallel zur Hauptlängsrichtung der Lamelle (20) verläuft, daß ein erster feststehender Abschnitt (22) der Lamelle (20) mit dem genannten beweglichen Bestandteil verbunden und/oder daran befestigt ist und ein zweiter Abschnitt (24) im Verhältnis zu dem genannten ersten feststehenden Abschnitt (22) angelenkt ist und daß sie elastische Rückstellmittel (32) für den zweiten Abschnitt (24) umfaßt, die diesen zu einer Ruheposition hin beanspruchen, in der sich die aerodynamisch aktiven Luftleitflächen der beiden Abschnitte (22, 24) der Lamelle (20) in etwa in der Verlängerung zueinander erstrecken.

2. Aerodynamisches Leitblech nach Anspruch 1 , **dadurch gekennzeichnet,** daß ein freier Zwischenraum (44) die benachbarten Kanten (28, 30) der beiden Abschnitte (22, 24) der Lamelle (20) trennt.

3. Aerodynamisches Leitblech nach einem der Ansprüche 1 bis 2 , **dadurch gekennzeichnet**, daß die beiden Abschnitte (22, 24) der Lamelle in der Nähe ihrer benachbarten Kanten (28, 30) im Verhältnis zueinander angelenkt sind.

4. Aerodynamisches Leitblech nach einem der Ansprüche 1 bis 2 , **dadurch gekennzeichnet**, daß die Gelenkachse (X-X) der beiden Abschnitte (22, 24) der Lamelle in der Nähe der Vorderkante (40) der Lamelle (20) angeordnet ist.

5. Aerodynamisches Leitblech nach einem der Ansprüche 1 bis 4 , **dadurch gekennzeichnet**, daß es Betätigungsmittel für die relative Verstellung der beiden Abschnitte (22, 24) der Lamelle (20) in Abhängigkeit von einem Betriebsparameter des Fahrzeugs oder von einem für die Fahrbedingungen des Fahrzeugs repräsentativen Parameter umfaßt.
